# EUROPÄISCHE PATENTSCHRIFT

(11) **EP 0 385 162 B1**
(45) Veröffentlichungstag und Bekanntmachung des Hinweises auf die Patenterteilung: **28.07.1993**
(21) Anmeldenummer: 90102652.6
(22) Anmeldetag: 10.02.1990
(51) Int. Cl.: B60T 8/18

(54) **Indirekt wirkende lastabhängige Druckluftbremse für Schienenfahreuge mit einem Druckübersetzer**
Indirectly acting load-dependent compressed-air brake for railway vehicles having a pressure converter
Frein à air comprimé à action indirecte en fonction de la charge pour véhicules ferroviaires avec un convertisseur de pression

(30) Priorität: 03.03.1989 CH 795/89
(43) Veröffentlichungstag der Anmeldung: 05.09.1990
(73) Patentinhaber: Oerlikon-Knorr Eisenbahntechnik AG, 8050 Zürich (CH)
(72) Erfinder: Fischer, Pius, CH-8153 Rümlang (CH)
(74) Vertreter: Hohn, Max Günter, Dipl.-Ing.

(56) Entgegenhaltungen:
- CH-A- 594 520
- DE-A- 1 605 278
- DE-A- 2 460 583
- DE-B- 1 012 630
- DE-C- 632 634
- DE-C- 633 628
- FR-A- 1 168 180

## Beschreibung

Die Erfindung betrifft eine indirekt wirkende lastabhängige Druckluftbremse für Schienenfahrzeuge nach dem Gattungsbegriff des Patentanspruches 1.

Bei einem bekannten Druckübersetzer dieser Art (DE-A-24 60 583) für eine selbsttätige, lastabhängige Druckluftbremse von Schienenfahrzeugen ist ein Umschaltventil vorhanden zum Umschalten des Übersetzungsverhältnisses am Druckübersetzer von einem ersten auf einen zweiten Wert. Diesem Umschaltventil wird eingangsseitig der Steuerdruck zugeführt und es weist einen Kolben auf zum Betätigen des Ventiles, der in der einen Richtung von einem bremsstufenabhängigen Druck und in der entgegengesetzten Richtung von einer Feder belastet ist. Dieses Umschaltventil wird betätigt, wenn der bremsstufenabhängige Druck die Federkraft übersteigt.

Der Druckübersetzer weist einen ersten Kolben auf, der vom Bremszylinderdruck beaufschlagt ist, sowie zwei weitere, diesem entgegenwirkende Kolben, von denen der eine vom Steuerdruck und der andere von dem vom Umschaltventil aus gesteuerten Druck beaufschlagbar ist. Der zum Betätigen des Umschaltventiles dienende Kolben ist in Ventilöffnungsrichtung vom Steuerdruck und in der Gegenrichtung, d.h. in Richtung der ihn belastenden Feder, von dem vom Umschaltventil ausgesteuerten.Druck beaufschlagt.

Dieser bekannte Druckübersetzer läßt sich nur in Abhängigkeit der Bremsstufe umschalten. Es hat sich jedoch gezeigt, daß es auch notwendig ist, das Übersetzungsverhältnis des Druckübersetzers in Abhängigkeit der Fahrzeugbelastung umzuschalten. Bei unterschiedlich belasteten Wagen eines langen Zuges sind die Bremsen der voll beladenen Wagen im Vergleich zu den Bremsen der leeren Wagen überlastet, vor allem bei scheibengebremsten Güterwagen. Die Bremskraft der voll beladenen Wagen soll daher dem Bruttogewicht entsprechend vermindert werden. Damit aber der Zug trotzdem rasch gebremst werden kann, muß daher die Bremskraft der leeren Wagen erhöht werden.

Die Aufgabe, welche mit der vorliegenden Erfindung gelöst werden soll, besteht daher in der Schaffung einer Vorrichtung, mit der das Umschalten des Übersetzungsverhältnisses am Druckübersetzer in Abhängigkeit der Fahrzeugbelastung möglich ist.

Die Lösung dieser Aufgabe besteht aus den Merkmalen des Kennzeichnungsteils des Patentanspruches 1.

Das zweite Umschaltventil weist einen vom Hauptluftleitungsdruck beaufschlagten Kolben auf, wobei mit diesem Umschaltventil der lastabhängige Luftdruck eines Wiegeventils überwachbar ist; das erste Umschaltventil der Umschalt-Ventileinrichtung weist einen vom lastabhängigen Druck des Wiegeventils beaufschlagten Kolben auf, mittels welchem die Druckbeaufschlagung des Druckübersetzers zum Zwecke seiner Umschaltung überwachbar ist.

Vorzugsweise ist das Übersetzungsverhältnis des Druckübersetzers bei großer Fahrzeugbelastung und niedrigen Bremsstufen klein und bei kleiner Fahrzeugbelastung und höheren Bremsstufen groß.

Der erfindungsgemäße Druckübersetzer hat den Vorteil, daß Radschäden durch überbeanspruchte Bremsen vermieden werden, insbesondere Risse durch Überhitzung der Bremsen. Außerdem lassen sich Wagen mit dem neuen Druckübersetzer in die üblichen Güterzüge einreihen.

Ein Ausführungsbeispiel des erfindungsgemäßen Druckübersetzers ist im folgenden anhand der beigefügten Zeichnung ausführlich beschrieben. Es zeigt :
- Fig.1: eine schematische Darstellung der gesamten Vorrichtung,
- Fig.2-5: Diagramme, aus denen das Bremsgewicht in Abhängigkeit vom Druck in der Hauptluftleitung ersichtlich ist.

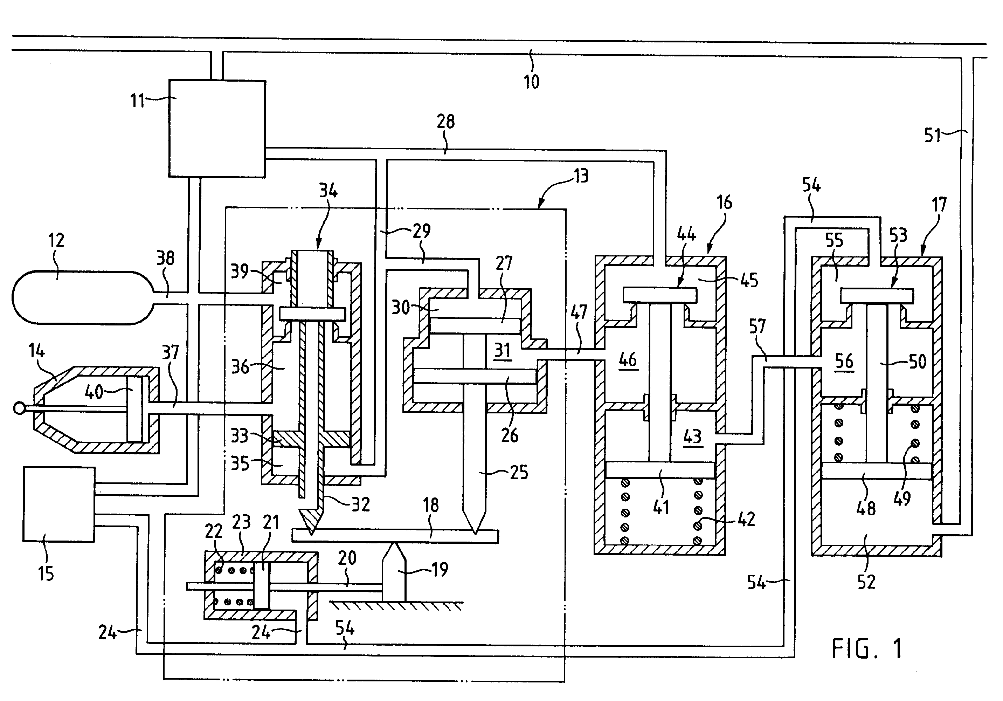

Gemäß Fig.1 ist an eine Hauptluftleitung 10 ein Steuerventil 11 angeschlossen. Mit diesem Steuerventil 11 wird in an sich bekannter Weise beim Absenken des Hauptluftleitungsdruckes ein wachsender Vorsteuerdruck erzeugt, mit dem die Bremse in üblicher Weise betätigt wird. Dieses Steuerventil wird daher als bekannt vorausgesetzt und ist hier nicht näher erläutert. Das Steuerventil 11 ist einerseits mit einem Hilfsluftbehälter 12 und andererseits mit einem Druckübersetzer 13 verbunden. An diesen Druckübersetzer 13 sind einerseits ein Bremszylinder 14 und ein Wiegeventil 15 angeschlossen und andererseits ein erstes und ein zweites Umschaltventil 16 und 17.

Der Druckübersetzer weist einen Waagebalken 18 auf, der sich auf einem verschiebbaren Widerlager 19 abstützt. Am Widerlager 19 ist über eine Stange 20 ein Kolben 21 befestigt. Dieser Kolben 21 ist einerseits von einer Feder 22 belastet und andererseits von Druckluft aus dem Wiegeventil 15. Der Kolben 21 befindet sich in einem Zylinder 23, der über eine Leitung 24 mit dem Wiegeventil 15 verbunden ist. Das Wiegeventil 15 erzeugt in an sich bekannter Weise einen von der Fahrzeugbelastung abhängigen Luftdruck, mit dem im Zylinder 23 - rechts vom Kolben 21 - ein lastabhängiger Druck erzeugt wird. Das bedeutet: je stärker das Fahrzeug beladen ist, umso größer ist dieser Druck im Zylinder 23 und umso mehr wird das Widerlager 19 nach links in Fig.1 verschoben. Entsprechend diesem wachsenden Druck wird also der Kolben 21 entweder gegen den Druck der Feder 22 nach links verschoben oder bei absinkendem Druck unter der Kraft der Feder 22 nach rechts. Auf dem Waagebalken 18 stützt sich eine erste Kolbenstange 25 ab, an der zwei Kolben 26 und 27 befestigt sind. Der obere kleinere Kolben 27 ist vom Vorsteuerdruck beaufschlagt, der über Leitungen 28 und 29 in eine Kammer 30 oberhalb des Kolbens 27 aus dem Steuerventil 11 zugeführt wird. Der untere größere Kolben 26 ist - in Abhängigkeit des eben erwähnten lastabhängigen Druckes vom Wiegeventil 15 - ebenfalls vom Vorsteuerdruck aus dem Steuerventil 11 über die erwähnte Leitung 28 beaufschlagbar, wie im folgenden noch beschrieben ist. Dieser Vorsteuerdruck aus dem Steuerventil 11 gelangt in eine Kammer 31 oberhalb des Kolbens 26. Ferner stützt sich auf dem Waagebalken 18 eine zweite Kolbenstange 32 ab, an der ein Kolben 33 befestigt ist. Dieser Kolben 33 dient zur Betätigung eines Ventiles 34, mit dem die Zufuhr von Druckluft aus dem Hilfsluftbehälter 12 zum Bremszylinder 14 steuerbar ist. Der Kolben 33 ist einerseits auf seiner unteren Seite vom Vorsteuerdruck beaufschlagbar, der über Leitung 29 vom Steuerventil 11 in die Kammer 35 geführt wird. Andererseits ist der Kolben 33 vom Bremszylinderdruck beaufschlagt, der in der Kammer 36 oberhalb des Kolbens 33 herrscht. Diese Kammer 36 ist über Leitung 37 mit dem Bremszylinder 14 verbunden. Bei offenem Ventil 34 wird diese Kammer 36 aus dem Hilfsluftbehälter 12 über Leitung 38 und Kammer 39 mit Druckluft gefüllt, die dann über Leitung 37 den Kolben 40 des Bremszylinders 14 beaufschlagt.

Das erste Umschaltventil 16 weist einen Kolben 41 auf, der einerseits von einer Feder 42 und andererseits - in einer Kammer 43 - von Druckluft aus dem Wiegeventil 15 beaufschlagbar ist, wie weiter unten noch beschrieben ist. Dieser Kolben 41 dient zur Betätigung des Ventiles 44. Dieses Ventil 44 wird durch die Kraft der Feder 42 geöffnet und durch den Druck in der Kammer 43 geschlossen. Bei offenem Ventil 44 gelangt Steuerluft aus dem Steuerventil 11 über Leitung 28 in eine Kammer 45 - oberhalb des Ventiles 44 - und in eine Kammer 46 - unterhalb des Ventiles 44 - und über eine Leitung 47 in die Kammer 31 des Druckübersetzers 13.

Das zweite Umschaltventil 17 weist einen Kolben 48 auf, der einerseits - nach unten - von einer Feder 49 belastet ist und der andererseits - nach oben - durch Druckluft aus der Hauptluftleitung 10 über eine Leitung 51 in einer Kammer 52 beaufschlagt ist. Der Kolben 48 dient zur Betätigung eines Ventiles 53. Dieses Ventil 53 wird durch die Kraft der Feder 49 geschlossen und durch den Druck in der Kammer 52 geöffnet, im Gegensatz zum oben beschriebenen ersten Umschaltventil 16. Bei offenem Ventil 53 gelangt ein lastabhängiger Luftdruck durch eine Leitung 54 in eine Kammer 55 - oberhalb des Ventiles 53 - und in eine Kammer 56 - unterhalb des Ventiles 53 - und über eine Leitung 57 in die Kammer 43 des ersten Umschaltventiles 16.

Die Wirkungsweise der beschriebenen Druckluftbremse ist wie folgt:

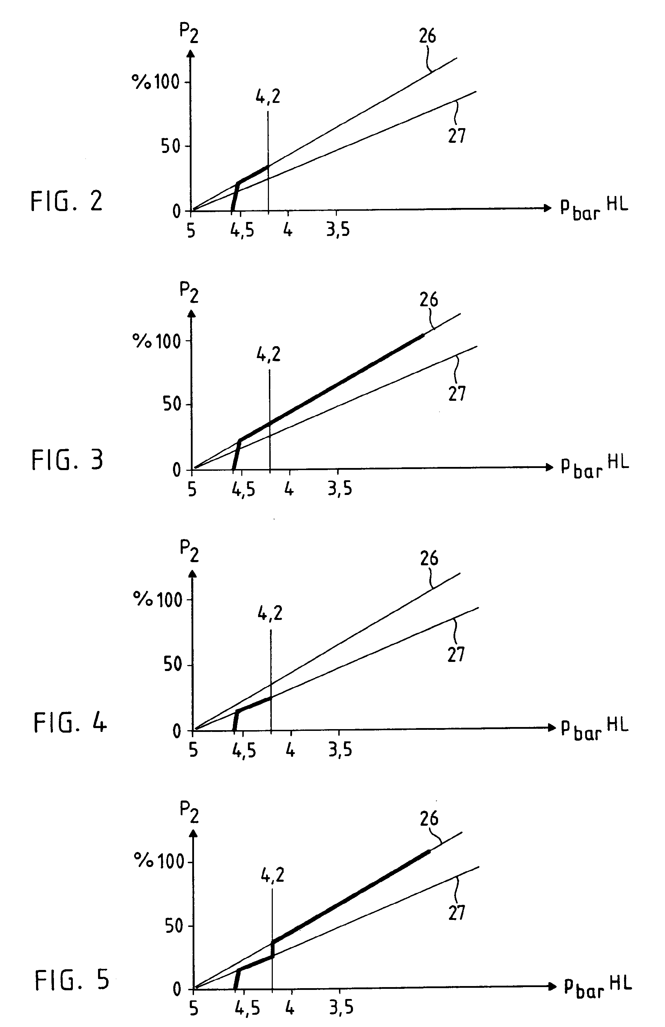

Es werden gemäss den vier Diagrammen (Fig.2-5) vier Fälle unterschieden:
1. Der Druck in der Hauptluftleitung ist grösser als 4,2bar, d.h. es wird nur wenig gebremst und das Fahrzeug ist nur wenig beladen, d.h. ein gewisser Grenzwert von z.B. 50% Beladung ist nicht überschritten.
   In diesem Falle soll stark gebremst werden, d.h. beim Druckübersetzer 13 soll der grössere Kolben 26 wirksam sein.
   Solange beim Bremsen der Druck in der Hauptluftleitung 10 nicht unter 4,2bar absinkt, ist das zweite Umschaltventil 17 offen, da der Druck in der Kammer 52 in der Lage ist, die Kraft der Feder 49 zu überwinden und das Ventil 53 zu öffnen. Solange aber das Fahrzeug nur schwach beladen ist, ist der lastabhängige Druck, der durch das geöffnete Ventil 53 in die Kammer 43 des ersten Umschaltventiles 16 gelangt, nur klein und ist daher nicht in der Lage, die Kraft der Feder 42 zu überwinden und das Ventil 44 bleibt daher offen und der Vorsteuerdruck gelangt durch dieses offene Ventil 44 in die Kammer 31 und somit ist der grössere Kolben 26 wirksam.
2. Der Druck in der Hauptluftleitung ist kleiner als 4,2bar, d.h. es wird stark gebremst, aber das Fahrzeug ist nur wenig beladen, d.h. ein gewisser Grenzwert von z.B. 50% Beladung wird nicht überschritten.
   In diesem Falle soll stark gebremst werden, d.h. beim Druckübersetzer 13 soll der grössere Kolben 26 wirksam sein.
   Sobald beim Bremsen der Druck in der Hauptluftleitung 10 unter 4,2bar absinkt, schliesst sich das zweite Umschaltventil 17, da der Druck in der Kammer 52 zu klein ist und die Kraft der Feder 49 ausreicht, um das Ventil 53 zu schliessen. Der lastabhängige Druck kann daher über das geschlossene Ventil 53 nicht mehr in die Kammer 43 des ersten Umschaltventiles 16 gelangen. Durch die Kraft der Feder 42 wird somit das Ventil 44 offen gehalten und der Vorsteuerdruck gelangt durch dieses offene Ventil 44 in die Kammer 31 und somit ist der grössere Kolben 26 wirksam.
3. Der Druck in der Hauptluftleitung ist grösser als 4,2bar, d.h. es wird nur wenig gebremst, aber das Fahrzeug ist stark beladen, d.h. ein gewisser Grenzwert von z.B. 50% ist überschritten.
   In diesem Falle soll nur schwach gebremst werden, d.h. beim Druckübersetzer soll der kleinere Kolben 27 wirksam werden.
   Solange beim Bremsen der Druck in der Hauptluftleitung 10 nicht unter 4,2bar absinkt, ist das zweite Umschaltventil offen, da der Druck in der Kammer 52 in der Lage ist, die Kraft der Feder zu überwinden und das Ventil 53 zu öffnen. Da nun das Fahrzeug stark beladen ist, ist der lastabhängige Druck, der durch das geöffnete Ventil 53 in die Kammer 43 gelangt, gross und ist daher in der Lage, die Kraft der Feder 42 zu überwinden und das Ventil 44 wird daher geschlossen. Der Vorsteuerdruck aus dem Steuerventil 11 gelangt daher nicht mehr durch das geschlossene Ventil 44 in die Kammer 31 und somit ist der kleinere Kolben 27 wirksam.
4. Der Druck in der Hauptluftleitung ist kleiner als 4,2bar, d.h. es wird stark gebremst; ausserdem ist das Fahrzeug stark beladen, d.h. ein gewisser Grenzwert von z.B. 50% ist überschritten.
   In diesem Falle soll stark gebremst werden, d.h. beim Druckübersetzer 13 soll der grössere Kolben 26 wirksam sein.
   Sobald beim Bremsen der Druck in der Hauptluftleitung 10 unter 4,2bar absinkt, schliesst sich das zweite Umschaltventil 17, da der Druck in der Kammer 52 zu klein ist und die Kraft der Feder 49 ausreicht, um das Ventil zu schliessen. Der lastabhängige Druck kann daher über das geschlossene Ventil 53 nicht mehr in die Kammer 43 des ersten Umschaltventiles 16 gelangen. Obwohl der lastabhängige Druck gross ist, bleibt daher unter der Kraft der Feder 42 das Ventil 44 offen und der Vorsteuerdruck gelangt durch dieses offene Ventil 44 in die Kammer 31 und somit ist der grosse Kolben 26 wirksam.

## Patentansprüche

1. Indirekt wirkende lastabhängige Druckluftbremse für Schienenfahrzeuge, mit einem Druckübersetzer (13), der eine in Abhängigkeit einer vorgegebenen Bremsstufe betätigbare Umschalt-Ventileinrichtung (16,17) aufweist, mit der das Übersetzungsverhältnis des Druckübersetzers (13) umschaltbar ist, dadurch gekennzeichnet, daß die Umschalt-Ventileinrichtung (16,17) zusätzlich in Abhängigkeit einer vorgegebenen Fahrzeugbelastung betätigbar ist.

2. Druckluftbremse nach Anspruch 1, dadurch gekennzeichnet, daß die Umschalt-Ventileinrichtung (16,17) aus einem ersten Umschaltventil (16) und einem zweiten Umschaltventil (17) besteht, wobei das erste Umschaltventil (16) einen vom lastabhängigen Druck eines Wiegeventiles (15) beaufschlagten Kolben (41) aufweist, während das zweite Umschaltventil (17) mit einem vom Hauptluftleitungsdruck beaufschlagten Kolben (48) versehen ist.

3. Drückluftbremse nach Anspruch 2, dadurch gekennzeichnet, daß das zweite Umschaltventil (17) ein vom Kolben (48) betätigbares Ventil (53) aufweist, welches die Verbindung zwischen dem Wiegeventil (15) und dem ersten Umschaltventil (16) überwacht, derart, daß bei geöffnetem Ventil (53) der Kolben (41) des ersten Umschaltventils (16) durch den lastabhängigen Druck des Wiegeventiles (15) beaufschlagbar ist.

4. Druckluftbremse nach Anspruch 2, dadurch gekennzeichnet, daß das erste Umschaltventil (16) ein vom Kolben (41) betätigbares Ventil (44) aufweist, mittels welchem die Druckbeaufschlagung des Druckübersetzers (13) zum Zwecke seiner Umschaltung überwachbar ist.

5. Druckluftbremse nach Anspruch 1 oder 4, dadurch gekennzeichnet, daß das Übersetzungsverhältnis des Druckübersetzers (13) bei großer Fahrzeugbelastung und niedrigen Bremsstufen klein ist und bei kleiner Fahrzeugbelastung und höheren Bremsstufen groß ist.

## Claims

1. Indirectly acting, load-dependent compressed air brake for rail vehicles, having a pressure converter (13) which has a change-over valve device (16, 17) which can be actuated in dependence on a predetermined brake level, with which device the conversion ratio of the pressure converter (13) can be changed, characterised in that the change-over valve device (16, 17) can additionally be actuated in dependence on a predetermined vehicle load.

2. Compressed air brake according to claim 1, characterised in that the change-over valve device (16, 17) comprises a first change-over valve (16) and a second change-over valve (17), the first change-over valve (16) having a piston (41) acted on by the load-dependent pressure of a rocker valve (15) whilst the second change-over valve (17) is provided with a piston (48) acted on by the main air line pressure.

3. Compressed air brake according to claim 2, characterised in that the second change-over valve (17) has a valve (53) acted on by the piston (48), which valve monitors the connection between the rocker valve (15) and the first change-over valve (16) so that when the valve (53) is open, the piston (41) of the first change-over valve (16) can be acted on by the load-dependent pressure of the rocker valve (15).

4. Compressed air brake according to claim 2, characterised in that the first change-over valve (16) has a valve (44) actuatable by the piston (41), by means of which valve the pressure action of the pressure converter (13) can be monitored for the purpose of change-over.

5. Compressed air brake according to claim 1 or 4, characterised in that the conversion ratio of the pressure converter (13) is small when there is a large vehicle load and low brake level and large when there is a small vehicle load and higher brake level.

## Revendications

1. Frein à air comprimé en fonction de la charge et à action indirecte pour des véhicules sur rails, comportant un transformateur de pression (13) qui comporte un dispositif à soupapes commutable (16,17) qui est susceptible d'être commandé en fonction d'un palier de freinage prédéterminé, et à l'aide duquel est susceptible d'être commuté le rapport de transformation dudit transformateur de pression, caractérisé par le fait que le dispositif à soupapes commutable (16,17) est, de plus, susceptible d'être commandé en fonction d'une charge prédéterminée du véhicule.

2. Frein à air comprimé selon la revendication 1, caractérisé par le fait que le dispositif à soupapes commutable (16,17) est constitué par une première soupape commutable (16) et par une seconde soupape commutable (17), la première soupape commutable (16) comportant un piston (41) chargé par la pression, fonction de la charge, d'une soupape de pesée (15), alors que la seconde soupape commutable (17) est pourvue d'un piston (48) chargé par la pression qui règne dans la conduite principale.

3. Frein à air comprimé selon la revendication 2, caractérisé par le fait que la seconde soupape commutable (17) comporte une soupape (53) susceptible d'être commandée par le piston (48) et qui contrôle de telle façon une liaison entre la soupape de pesée (15) et la première soupape commutable (16) que lorsque la soupape (53) est ouverte, le piston (41) de la première soupape commutable (16) est susceptible d'être chargé par la pression, fonction de la charge, de la soupape de pesée (15).

4. Frein à air comprimé selon la revendication 2, caractérisé par le fait que la première soupape commutable (16) comporte une soupape (44) susceptible d'être commandée par le piston (41), et à l'aide de laquelle est susceptible d'être contrôlée la charge en pression du transformateur de pression (13), en vue de sa commutation.

5. Frein à air comprimé selon la revendication 1 ou 4, caractérisé par le fait que le rapport de transformation du transformateur de pression (13) est faible pour une forte charge du véhicule et pour de bas paliers de freinage et est fort pour une faible charge du véhicule et pour des paliers de freinage élevés.
